# DEMANDE DE BREVET EUROPEEN

(11) **EP 1 155 806 A1**
(43) Date de publication de la demande: **21.11.2001**
(21) Numéro de dépôt: 01400617.5
(22) Date de dépôt: 09.03.2001
(51) Int. Cl.: B29C 47/06, E06B 3/62, B60J 10/00

(54) **Procédé de fabrication d'une garniture d'étanchéité, en particulier pour fenêtre vitrée coulissante, et fenêtre équipée d'une telle garniture**

(30) Priorité: 18.05.2000 FR 0006358
(71) Demandeur: HUTCHINSON S.A., 75008 Paris (FR)
(72) Inventeur: Douillet, Jacques, 38430 Moirans (FR)
(74) Mandataire: Doireau, Marc

(57) **Abrégé**

L'invention concerne un procédé de fabrication d'une garniture d'étanchéité (5), en particulier pour fenêtre vitrée coulissante, destinée à être montée sur le pourtour d'un vitrage (3) et venir se loger à l'intérieur d'un cadre (2) délimité par la fenêtre, caractérisé en ce qu'il consiste à fabriquer la garniture (5) à partir de matériaux élastomères, à coextruder deux mélanges d'élastomères et dont l'un seulement contient des agents de vulcanisation, à soumettre la garniture (5) extrudée à un processus de vulcanisation, et à utiliser au moins le mélange non vulcanisé comme élément de contact (20) entre la garniture (5) et le vitrage (3) et/ou entre la garniture (5) et le cadre (2).

## Description

La présente invention concerne notamment un procédé de fabrication d'une garniture d'étanchéité, en particulier pour fenêtre coulissante, destinée à être montée sur le pourtour d'un vitrage et venir se loger à l'intérieur d'un cadre délimité par la fenêtre.

D'une manière générale, une telle garniture d'étanchéité qui forme un interface entre le vitrage et le cadre de la fenêtre, doit notamment assurer des fonctions d'étanchéité et de rattrapage des différentes tolérances de fabrication dans les dimensions du vitrage et du cadre de la fenêtre, et elle doit également pouvoir s'emboîter dans le cadre sans exiger trop d'effort, ni entraîner une déformation du profil du cadre de la fenêtre.

Lorsque le domaine d'application de cette garniture est notamment celui des fenêtres coulissantes à un ou plusieurs vantaux, qui s'ouvrent et se ferment par translation horizontale, la garniture doit également assurer une tenue du vitrage dans le cadre sous un effort d'arrachement exercé sur les montants verticaux du cadre de la fenêtre.

Le problème de la tenue à l'arrachement est relativement simple à résoudre entre la garniture et le cadre de la fenêtre, et a déjà trouvé une solution au moyen par exemple de la coopération de languettes prévues sur la garniture et de becs de retenue prévus sur le cadre.

Quant à une solution pour résoudre le problème de la tenue à l'arrachement entre la garniture d'étanchéité et le vitrage, on connaît du document FR-A-2 734 019 une garniture d'étanchéité dont une partie est fabriquée en un matériau élastomère ou thermoplastique de type compact ou cellulaire et dont la dureté SHORE A est inférieure à celle du matériau constituant le reste de la garniture. Cette partie de la garniture qui présente une dureté moindre forme un élément compressible ayant une surface de contact qui lui permet d'adhérer en quelque sorte au vitrage pour obtenir une bonne tenue à l'arrachement.

Ainsi, selon ce document antérieur, la garniture est fabriquée par coextrusion à partir de deux matériaux ayant des duretés SHORE A différentes.

Un but de l'invention est d'apporter un perfectionnement au procédé de fabrication d'une telle garniture et de réduire notablement son coût de mise en oeuvre.

A cet effet, l'invention propose un procédé de fabrication d'une garniture d'étanchéité, en particulier pour fenêtre vitrée coulissante, destinée à être montée sur le pourtour d'un vitrage et venir se loger à l'intérieur d'un cadre délimité par la fenêtre, procédé qui est caractérisé en ce qu'il consiste à fabriquer la garniture à partir de matériaux élastomères, à coextruder deux mélanges d'élastomères et dont l'un seulement contient des agents de vulcanisation, à soumettre la garniture extrudée à un processus de vulcanisation, et à utiliser au moins le mélange non vulcanisé comme élément de contact entre la garniture et le vitrage et/ou entre la garniture et le cadre.

De préférence, le procédé consiste à fabriquer la garniture à partir d'un seul matériau élastomère, et à coextruder deux mélanges de ce même matériau élastomère et dont l'un seulement contient des agents de vulcanisation.

Par ailleurs, si on utilise deux mélanges de base ayant des compositions identiques, on réduit notablement le coût de mise en oeuvre du procédé, sachant que la préparation d'un seul mélange est déjà en soi une opération longue et délicate, notamment du fait du nombre important d'éléments qui entrent dans la composition d'un mélange

Ainsi, en mettant en oeuvre un tel procédé, on constate que la partie non vulcanisée de la garniture ne présente pas les propriétés élastiques de sa partie vulcanisée. Concrètement, la partie non vulcanisée de la garniture présente un état de surface quelque peu pâteux qui va produire un effet d'adhérence à son contact avec le vitrage.

En outre, l'expérience montre que cet effet d'adhérence est nettement renforcé par rapport à la solution préconisée dans le document antérieur précité. Ainsi, la mise en oeuvre du procédé selon l'invention conduit à un résultat en quelque sorte inattendu, dès lors où l'on cherchait plutôt à obtenir cet effet d'adhérence à partir de deux matériaux ayant des duretés SHORE A différentes.

D'une manière générale, l'élastomère utilisé est un EPDM, un SBR ou un CR par exemple, et les agents de vulcanisation peuvent être du soufre, des peroxydes organiques, des oxydes métalliques ou des résines phénoliques.

L'invention a également pour objet une garniture d'étanchéité, en particulier pour fenêtre vitrée coulissante, qui présente une section droite en U avec une paroi de fond bordée de deux parois latérales qui sont espacées l'une de l'autre d'une distance correspondant sensiblement à l'épaisseur du vitrage, garniture qui est caractérisée en ce qu'elle est fabriquée selon le procédé tel que défini précédemment, et en ce que le mélange non vulcanisé de la garniture est au moins situé sur une paroi latérale de la garniture pour former un élément destiné à venir en contact avec le vitrage et/ou avec le cadre.

En variante, la garniture d'étanchéité peut être constituée de deux éléments distincts destinés à coopérer avec les deux faces principales opposées du vitrage, et est caractérisée en ce que l'une au moins des deux éléments de la garniture est fabriqué selon le procédé tel que défini précédemment, et en ce que le mélange non vulcanisé dudit élément fabriqué selon ledit procédé forme un élément destiné à venir au contact du vitrage et/ou du cadre.

D'une manière générale, la tenue mécanique de la garniture au niveau du cadre est assurée par des moyens d'accrochage mécaniques. Le procédé selon l'invention permet également de pouvoir supprimer en totalité ou en partie ces moyens d'accrochage mécaniques, dès lors où le cadre n'est pas toujours adapté pour recevoir de tels moyens.

Enfin, l'invention a également pour objet une fenêtre vitrée à un ou plusieurs vantaux, qui est caractérisée en ce que le vitrage est rapporté sur le cadre de la fenêtre avec interposition d'une garniture d'étanchéité telle que définie précédemment.

Une telle garniture d'étanchéité offre ainsi de nombreux avantages, parmi lesquels on peut notamment citer :
- un procédé de fabrication nettement simplifié et donc d'un coût de revient réduit, et
- une tenue à l'arrachement qui peut être nettement renforcée entre la garniture et le vitrage et/ou le cadre.

D'autres avantages, caractéristiques et détails de l'invention ressortiront du complément de description qui va suivre en référence à des dessins annexés, donnés uniquement à titre d'exemple et dans lesquels :
- la figure 1 est une vue en coupe d'un montant d'un cadre de fenêtre destiné à recevoir le pourtour d'un vitrage avec interposition d'une garniture d'étanchéité fabriquée selon le procédé de l'invention,
- la figure 2 est une vue en coupe d'un cadre de fenêtre destiné à recevoir le pourtour d'un vitrage avec interposition d'un autre type de garniture d'étanchéité également fabriquée selon le procédé de l'invention, et
- la figure 3 est une vue en coupe partielle pour illustrer une variante de la figure 1.

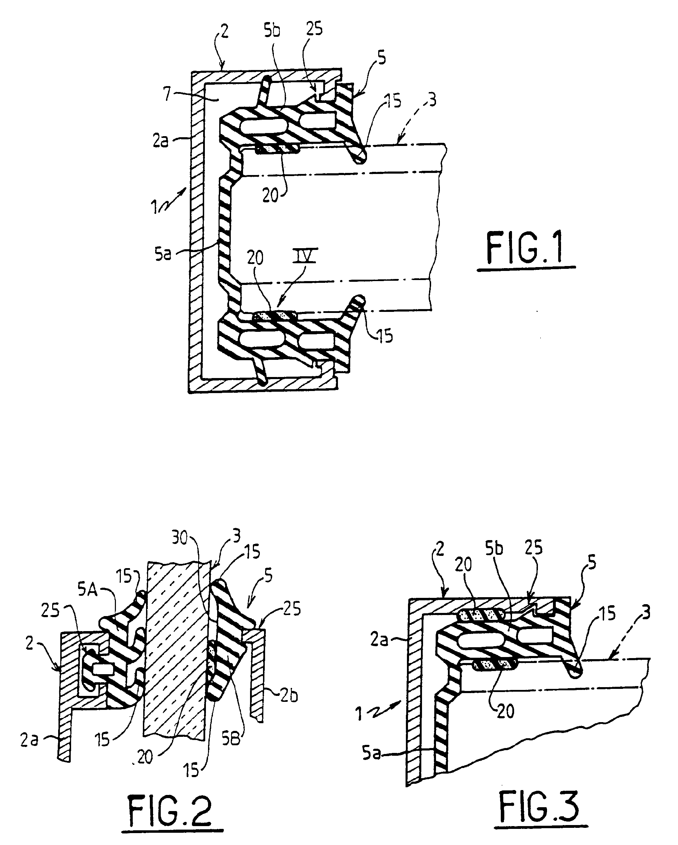

Une fenêtre vitrée 1 du type coulissante et telle qu'illustrée sur la figure 1 comprend un cadre 2 qui reçoit un vitrage 3 avec interposition d'une garniture d'étanchéité 5.

La représentation du cadre 2 de la fenêtre 1 a été limitée à un montant vertical 2a pour des raisons de simplification. Ce montant 2a est un profilé à section droite en U et qui délimite une rainure interne rectiligne 7 dans laquelle vient se loger la partie de la garniture d'étanchéité 5 associée à ce montant 2a.

La garniture d'étanchéité 5 associée au montant 2a du cadre 2 s'étend sur toute la longueur de ce montant 2a. La garniture d'étanchéité 5 a également une section droite en U formée d'une paroi de fond 5a bordée de deux parois latérales 5b qui sont espacées l'une de l'autre d'une distance correspondant sensiblement à l'épaisseur du vitrage 3.

D'une façon connue en soi, la garniture d'étanchéité 5 est munie de lèvres 15 destinées à se déformer au contact du vitrage 3 pour assurer l'étanchéité. Une lèvre d'étanchéité 15 est par exemple prévue au niveau de la face interne de chaque paroi latérale 5b.

Le contact entre la garniture 5 et le vitrage 3 est assuré par une partie 20 de la garniture 5 qui forme un élément compressible destiné à assurer une bonne tenue à l'arrachement par un effet d'adhérence.

Selon l'invention, cette garniture d'étanchéité 5 avec sa partie 20 est fabriquée à partir de matériaux élastomères. Plus précisément, ce procédé consiste à préparer deux mélanges pâteux de matériaux élastomères, mais en incorporant des agents de vulcanisation à un seul de ces mélanges.

Ces deux mélanges sont ensuite coextrudés, et le produit extrudé est soumis à un processus de vulcanisation à air chaud par exemple.

Au cours de la vulcanisation, seul le mélange qui contient des agents de vulcanisation va être vulcanisé, ce qui va avoir pour effet de conférer à ce mélange des propriétés élastiques et ce, d'une façon connue en soi. Par contre, le mélange non vulcanisé ne présentera pas de propriétés élastiques, c'est-à-dire qu'il restera dans un état légèrement pâteux qui va lui conférer des propriétés d'adhérence lorsqu'il sera mis au contact du vitrage 3.

Avantageusement, le procédé consiste à fabriquer la garniture d'étanchéité 5 à partir d'un seul matériau élastomère, tel que EPDM, SBR ou CR par exemple, et à coextruder deux mélanges de ce même matériau élastomère et dont l'un seulement contient des agents de vulcanisation, tels que du soufre, des peroxydes organiques, des oxydes métalliques ou des résines phénoliques. Ces deux mélanges peuvent avoir des compositions sensiblement identiques, à l'exception des agents de vulcanisation contenus dans l'un de ces mélanges.

Au montage, lorsque la garniture 5 est rapportée sur le pourtour du vitrage 3, ou inversement, chaque partie 20 de la garniture 5 est mise avantageusement en compression pour venir en contact pressé avec le vitrage 3, comme cela est illustré à la figure 1.

D'une manière générale, au niveau du montant 2a du cadre 2, la garniture d'étanchéité 5 vient se loger et se fixer dans la rainure 7 en s'emboîtant dans le montant 2a par suite de la coopération de moyens complémentaires 25 respectivement prévus au niveau du montant 2a et de la garniture 5, d'une façon connue en soi, ces moyens 25 formant des moyens d'accrochage mécaniques entre la garniture 5 et le montant 2a du cadre 2.

Dans l'exemple illustré à la figure 2, la garniture d'étanchéité 5 est constituée en deux éléments distincts 5A et 5B destinés à coopérer avec les deux faces principales du vitrage 3, respectivement.

Selon l'invention, un au moins des deux éléments 5A ou 5B de la garniture 5 va être fabriqué selon le procédé tel que défini précédemment, pour que cet élément présente une partie 20 non vulcanisée qui assurera l'adhérence avec le vitrage 3.

D'une manière générale, l'élément 5A de la garniture 5 comprend, côté vitrage 3, des lèvres d'étanchéité 15 et, côté cadre 2, des moyens qui coopèrent avec des moyens de forme complémentaire prévus sur le montant 2a pour fixer par emboîtement cet élément 5A de la garniture 5 au cadre 2 de la fenêtre. Ces moyens d'accrochage mécaniques sont référencés en 25.

L'élément 5B de la garniture 5 comprend, côté vitrage 3, une lèvre d'étanchéité 15 sur chacun de ses deux côtés longitudinaux et, dans sa partie centrale, la partie 20 non vulcanisée qui s'étend sensiblement sur toute la longueur de la garniture 5 et, côté montant 2b du cadre 2, des moyens qui coopèrent avec des moyens de forme complémentaire prévus sur le montant 2b pour fixer par emboîtement cet élément 5B de la garniture 5 au cadre 2 de la fenêtre. Ces moyens d'accrochage mécaniques sont également référencés en 25.

Il est à noter que la surface 30 de la partie 5B de la garniture d'étanchéité 5 qui est en regard du vitrage 3 est de forme concave ou en demi-lune.

Le montage de la garniture d'étanchéité 5 s'effectue en plusieurs étapes :
- l'élément 5A de la garniture 5 est rapporté sur le montant 2a de la fenêtre,
- le vitrage 3 est mis en position dans le montant 2a, ce qui entraîne la déformation des lèvres d'étanchéité 15,
- le montant 2b est rapporté et fixé au montant 2a, et
- l'élément 5B de la garniture 5 est engagé à force entre le montant 2b et le vitrage 3, ce qui entraîne la déformation par compression de sa partie 20 qui, va adhérer ainsi au vitrage 3.

Ainsi, selon l'invention, la garniture d'étanchéité peut être soit monobloc et rapportée sur le pourtour du vitrage, soit en deux éléments respectivement rapportés sur la périphérie des deux faces principales opposées du vitrage.

D'une manière générale, l'invention a été décrite en prenant comme exemple le renforcement de la tenue à l'arrachement entre la garniture et le vitrage. Bien évidemment, l'invention peut être également utilisée pour assurer ou renforcer la tenue à l'arrachement entre la garniture et le cadre.

Cette variante est illustrée sur la figure 3 dans le cas de la garniture à section droite en U de la figure 1, sachant que cette variante peut être également envisagée dans le cadre de la garniture de la figure 2 au niveau de l'un et/ou de l'autre des deux éléments 5A et 5B. Selon cette variante, la partie 20 non vulcanisée de la garniture 5 renforce la tenue à l'arrachement procurée par les moyens d'accrochage mécaniques 25.

## Revendications

1. Procédé de fabrication d'une garniture d'étanchéité, en particulier pour fenêtre vitrée coulissante, destinée à être montée sur le pourtour d'un vitrage (3) et venir se loger à l'intérieur d'un cadre (2) délimité par la fenêtre, **caractérisé en ce qu'**il consiste à fabriquer la garniture (5) à partir de matériaux élastomères, à coextruder deux mélanges d'élastomères et dont l'un seulement contient des agents de vulcanisation, à soumettre la garniture extrudée à un processus de vulcanisation, et à utiliser au moins le mélange non vulcanisé comme élément de contact (20) entre la garniture (5) et le vitrage (3) et/ou entre la garniture (5) et le cadre (2).

2. Procédé selon la revendication 1, **caractérisé en ce qu'**il consiste à fabriquer la garniture (5) à partir d'un seul matériau élastomère et à coextruder deux mélanges de ce même matériau élastomère et dont l'un seulement contient des agents de vulcanisation.

3. Procédé selon la revendication 2, **caractérisé en ce qu'**il consiste à préparer deux mélanges de base identiques du même matériau élastomère, et à ajouter à l'un d'eux seulement des agents de vulcanisation.

4. Procédé selon la revendication 2 ou 3, **caractérisé en ce qu'**il consiste à prendre comme élastomère un EPDM, un SBR ou un CR.

5. Garniture d'étanchéité, en particulier pour fenêtre vitrée, coulissante, destinée à être montée sur le pourtour d'un vitrage (3) et venir se loger à l'intérieur d'un cadre (2) délimité par la fenêtre, ladite garniture (5) présentant une section droite en U avec une paroi de fond (5a) bordée de deux parois latérales (5b) qui sont espacées l'une de l'autre d'une distance correspondant sensiblement à l'épaisseur du vitrage (3), **caractérisée en ce que** la garniture (5) est fabriquée selon le procédé défini par l'une quelconque des revendications précédentes, et **en ce que** le mélange non vulcanisé de la garniture (5) est au moins situé sur une paroi latérale (5b) de la garniture (5) pour former un élément (20) destiné à venir en contact avec le vitrage (3) et/ou avec le cadre (2).

6. Garniture d'étanchéité, en particulier pour fenêtre vitrée coulissante, destinée à être montée sur le pourtour d'un vitrage (3) et venir se loger à l'intérieur d'un cadre (2) délimité par la fenêtre, la garniture (5) étant constituée de deux éléments distincts (5A, 5B) destinés à coopérer avec les deux faces principales opposées du vitrage (3), **caractérisée en ce que** l'une au moins des deux éléments (5A, 5B) de la garniture (5) est fabriqué selon le procédé défini par l'une quelconque des revendications 1 à 4, et **en ce que** le mélange non vulcanisé dudit élément fabriqué selon ledit procédé est destiné à former un élément de contact (20) avec le vitrage (3) et/ou du cadre (2).

7. Fenêtre vitrée à un ou plusieurs vantaux, **caractérisée en ce que** le vitrage (3) est rapporté sur le cadre de la fenêtre avec interposition d'une garniture (5) d'étanchéité telle que définie par la revendication 5 ou 6.
